# EUROPEAN PATENT SPECIFICATION

(11) **EP 2 352 787 B1**
(45) Date of publication and mention of the grant of the patent: **23.11.2016**
(21) Application number: 09820797.0
(22) Date of filing: 05.10.2009
(51) Int. Cl.: C08K 3/34, C08K 3/22, C08K 3/32, C08K 3/36

(54) **FLAME RETARDANT POLYMERIC MATERIALS**
FEUERFESTE POLYMERMATERIALIEN
MATÉRIAUX POLYMÈRES À RETARD DE FLAMME

(30) Priority: 15.10.2008 NO 20084323
(43) Date of publication of application: 10.08.2011
(73) Proprietor: Elkem AS, 0277 Oslo (NO); Bundesanstalt Für Materialforschung Und -Prüfung (BAM), 12205 Berlin (DE)
(72) Inventor: SCHARTEL, Bernhard, 14167 Berlin (DE); SCHMAUCKS, Gerd, N-4640 Søgne (NO); ROSZINSKI, Jan, Olaf, N-4640 Søgne (NO)
(74) Representative: Copsey, Timothy Graham
(86) International application number: PCT/NO2009/000342
(87) International publication number: WO 2010/044671

(56) References cited:
- WO-A1-00/27911
- WO-A1-2006/052138
- WO-A1-2006/080606
- JP-A- S58 117 237
- US-A1- 2008 161 466
- Neuerer Mikro-Und ET AL: "ENTWICKLUNG UND CHARAKTERISIERUNG VON ELASTOMERKOMPOSITEN AUF BASIS", , 27 November 2007 (2007-11-27), XP055212538, Retrieved from the Internet: URL:http://www.qucosa.de/fileadmin/data/qu cosa/documents/1605/1196247949963-9631.pdf [retrieved on 2015-09-10]
- DATABASE WPI Week 200422, Derwent Publications Ltd., London, GB; AN 2004-230741, XP003026363 & JP 2003 335962 A (SEKISUI CHEM IND CO LTD) 28 November 2003
- DATABASE WPI Week 200914, Derwent Publications Ltd., London, GB; AN 2009-B45104, XP003026364 & JP 2009 001012 A (SEKISUI CHEM IND CO LTD) 08 January 2009

## Description

### Technical field:

The present invention relates to polymeric materials having a high flame retardant capability.

### Technical Background:

From WO 2006/052138 it is known that addition of microsilica to thermoplastics and rubbers increases the fire retardancy of these materials. It is further known from EP 000000761746 A1 / DE 000019530200 A1 / US 000005849827 A and WO 002000068312 A1 that nanoparticles such as nanodispersed layered silicates (organically modified clays) together with flame retardant fillers provide fire retardant properties to thermoplastics. However, it is known that neither microsilica nor nanodispersed layered silicate alone can provide sufficient flame retardancy in polymeric materials to pass any relevant fire performance test when used alone. Layered silicates and microsilica are inorganic additives, which act mainly via heat shielding and reduce the heat release rate (HRR) and the peak (= maximum) of heat release rate (PHRR). This effect is especially high in polymers, which do not form a residue, such as polyamide (PA), polypropylene (PP) and polystyrene (PS). Whereas fire risks like the total heat evolved (THE) are only reduced according to the amount of polymer replaced by the inert filler.

The reduction of HRR is not linearly depending on the amount of filler used. For layered silicate, a strong reduction of 40 to 75 % occurs at addition levels of 2 - 5 wt.-% based on the weight of polymer due to the formation of ceramic or carbonaceous-ceramic residue (char). No further significant effect is found when the amount is increased to above 7.5 wt.-%. Only at very high addition levels an additional reduction of PHRR as a result of the amount of polymer replaced by the inert filler can be observed.

For the combination of layered silicate and microsilica antagonism or in the best case a superposition was therefore expected with respect to the fire retardancy.

### Disclosure of Invention

The object of the present invention is to provide polymeric materials with very high flame retardancy in order for the polymeric materials to pass relevant fire performance tests.

The present invention therefore relates to flame retardant materials which polymeric materials contain microsilica and nanodispersed aluminosilicates as flame retardant additives.

According to a preferred embodiment nanodispersed organically modified layered silicates are used as aluminosilicates and more preferably montmorillonite types aluminosilicates intercalated with quaternary amonium or organical phosphonium ions.

According to claim 1 the polymeric materials contain 1-10 wt.-% layered aluminosilicates and 2 - 20 wt.-% microsilica based on 100 wt.% of the weight of polymer.

More preferably the polymeric materials contain 2 - 7.5 wt.-% layered aluminosilicates and 5 - 15 wt.-% microsilica.

It has surprisingly been found that the combination of layered aluminosilicates and microsilica shows a strong superposition or even synergistic effect on flame retardancy of polymeric materials thereby providing high flame retardancy at much lower additions than would be necessary by using conventional flame retardant fillers like aluminium trihydrate.

The term aluminosilicates used in the specification and claims of this application includes all kinds of zeolithes and layered clays. In particular zeolithes according to Me_{2/n}O • Al₂O₃ • xSiO₂ • yH₂O (Me = hydrogen or metal ion of the 1st to 5th main group or 1st to 8th sub-group), and all kinds of layered aluminosilicates (kaolin types, spinel types, serpentine types, and montmorillonite types), and types containing Cu2+-, Co2+-, and Ni2+, including all mixtures and modified compounds.

The term microsilica used in the specification and claims of this application is particulate amorphous SiO₂ obtained from a process in which silica (quartz) is reduced to SiO-gas and the reduction product is oxidised in vapour phase to form amorphous silica. Microsilica may contain at least 70% by weight silica (SiO₂) and has a specific density of 2.1 - 2.3 g/cm³ and a surface area of 15 - 40 m²/g. The primary particles are substantially spherical and have an average size of about 0.15 µm. Microsilica is preferably obtained as a coproduct in the production of silicon or silicon alloys in electric reduction furnaces. In these processes large quantities of microsilica are formed. The microsilica is recovered in conventional manner using baghouse filters or other collection apparatus.

The term polymeric material includes polyolefines such as poly(ethylene), poly(propylene) and poly(butylen), polystyrenes, polyacrylates and polymethacrylates, polyamides, polyesthers such as poly(ethylene terephthalate) and poly(butylene terephthalate), polyacrylnitriles, polycarbonates, natural and synthetic rubbers, thermosets such as epoxy or vinyl ester based thermosets, polyurethanes, polyimides, halogen-containing polymers such as poly(vinylchlorid) or poly(vinylfluorid), copolymers, polymer blends and polymer composites including all kind of glass and carbon fibre reinforced composites.

The term nanodispersed used in the specification and claims of this application are disordered and ordered intercalated and exfoliated aluminosilicate polymer composites as well as partly exfoliated and partly intercalated systems.

### Short description of figures

Figure 1 is a graph showing HRR (heat release rate) and THR (total heat release) for polyamide 11 (PA 11), PA 11 with addition of layered aluminosilicate (PA 11/LS), PA 11 with addition of microsilica (PA 11/MS), and with addition of layered aluminosilicate and microsilica (PA 11/LS/MS)
Figure 2 shows residue of PA 11 without any addition of fire retardant additives,
Figure 3 shows residue of PA 11 with addition of layered aluminosilicate,
Figure 4 shows residue of PA 11 with addition of microsilica,
Figure 5 shows residue of PA 11 with addition of both layered aluminosilicate and microsilica,
Figure 6 is a graph showing HRR (heat release rate) and THR (total heat release) for polypropylene (PP),
Figure 7 is a graph showing HRR and THR for PP containing microsilica,
Figure 8 is a graph showing HRR and THR for PP containing layered aluminosilicate, and
Figure 9 is a graph showing HRR and THR for PP containing layered aluminosilicate and microsilica.

### Detailed description of the invention

### Example 1

To the polyamide polymer PA 11, Rilsan BMN 0 (delivered by Arkema) was added 7 wt.-% modified layered aluminosilicate, EXM 1485, (delivered by Sud-Chemie AG) and 10 wt.-% Sidistar^{®} microsilica (delivered by Elkem AS). The PA 11 polymer containing layered aluminosilicate and Sidistar^{®} microsilica was tested as follows.

The reaction-to-fire of the materials was tested according to ISO 5660-1 (cone calorimeter test). The sample thickness was 4 mm. The samples were measured in horizontal position in an Al-tray. The investigation was done for three different irradiations (35, 50, and 70 kW m⁻²) representing different fire scenarios. All measurements were done in duplicate and show a very high reproducibility. The heat release characteristic as the main fire hazard was addressed in particular by the means of discussing the total heat evolved (THE), maximum heat release rate (PHRR), and maximum average rate of heat emission (MAHRE).

For comparison purposes; PA 11 without fire retardants, PA 11 with 7 wt.-% modified layered aluminosilicate and PA 11 with 10 wt.-% Sidistar^{®} microsilica were tested.

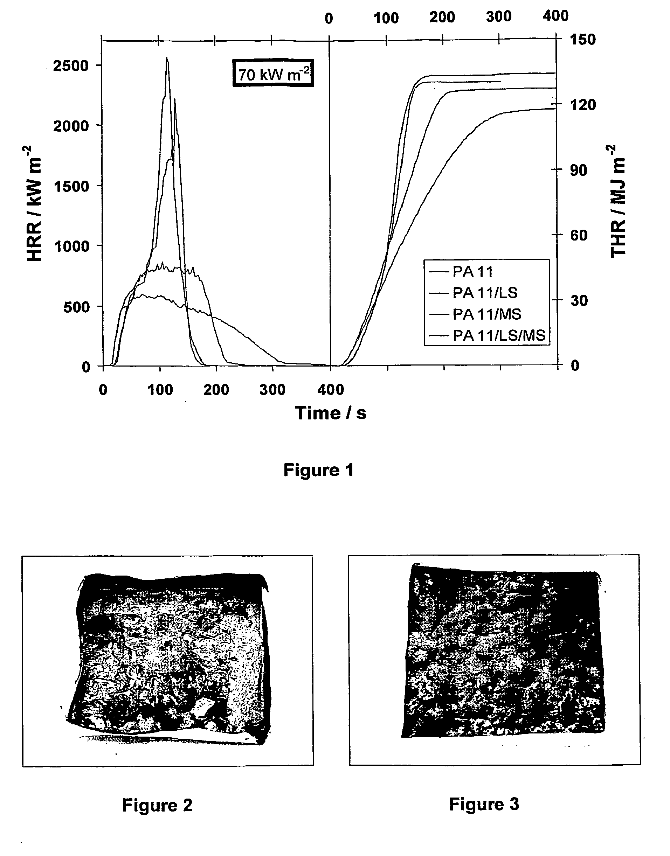

The results from the tests are shown in Table 1 and in Figure 1 - 5. Figure 1 shows the heat release rate (HRR) and the total heat release rate (THR) of PA 11, PA 11 with addition only of 7 wt.-% layered aluminosilicate (PA 11/LS), PA 11 with addition only of 10 wt.-% microsilica (PA 11/MS), and PA with 7 wt-% aluminosilicate and 10 wt-% microsilica (PA 11/LS/MS). Figure 1 illustrates that the combination of both additives resulted in a clearly higher flame retardancy with respect to the two most important fire risks; total heat release (correspond to the fire load) and heat release rate (corresponds to the fire growth) than using only layered aluminosilicate or microsilica. In Table 1 the main characteristics for the reaction-to-fire is summarized and assessed. The assessment is based on comparing the results with the result expected based on assuming the superposition of the effects by each additive used and expected based on combining two inert filler barrier effects. Table 1 underlines the unexpected high flame retardancy effect based on the combination of layered silicate and microsilica.

**Table 1**

| | PA 11/LS/MS | PA 11/LS/MS | conclusion | normally |
|---|---|---|---|---|
| | | Calculated Superposition | | |
| | | irradiation | 35 kW/m² | |
| THE / MJm⁻² | 118 ± 3 | 122 | superposition | slight antagonism / superposition |
| PHRR / kW m⁻² | 380 ± 10 | 350 | slight antagonism / superposition | strong antagonism |
| MARHE / kW m⁻² | 220 ± 5 | 280 | synergy | antagonism / superposition |

| | | irradiation | 50 kW/m² | |
|---|---|---|---|---|
| THE / MJm⁻² | 119 ± 3 | 125 | superposition / slight synergy | slight antagonism / superposition |
| PHRR / kW m⁻² | 502 ± 20 | 450 | slight antagonism / superposition | strong antagonism |
| MARHE / kW m⁻² | 346 ± 10 | 493 | strong synergy | antagonism / superposition |

| | | irradiation | 70 kW/m² | |
|---|---|---|---|---|
| THE / MJm⁻² | 118 ± 3 | 124 | superposition / slight synergy | slight antagonism / superposition |
| PHRR / kW m⁻² | 606 ± 15 | 694 | synergy | strong antagonism |
| MARHE / kW m⁻² | 455 ± 5 | 617 | strong synergy | antagonism / superposition |

The synergy has been found in the fire properties known to be influenced by the barrier or shielding effect of the residue. This is obvious in the morphology of the residue of the cone calorimeter tests shown in Figure 2 - 5.

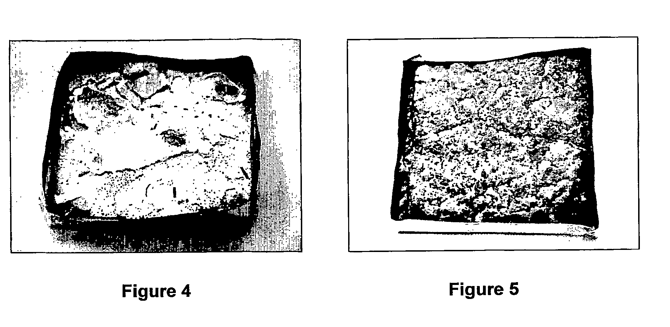

Figure 2 shows the morphology of PA 11 fire residue without addition of layered aluminosilicate and microsilica and shows that apart from a tiny skin of thermo-oxidised polyamide practically no residue is left. Figure 3 shows the morphology of PA 11 residue with addition only of layered aluminosilicate with residue in grey-black colour and with larger cauliflower-like structure, grey to black. Figure 4 shows the morphology of PA 11 residue with addition only of microsilica with residue and white-grey skin and with lose structures. Figure 5 show the morphology of PA 11 residue with addition of both layered aluminosilicate and microsilica according to the present invention. The residue is white-grey with fine cauliflower-like interconnected structure.

Figure 2 - 5 shows that at low and medium external heat flux, the combination of layered aluminosilicate and microsilica in PA 11 is leading to more homogeneous, finer structured and more closed ceramic residues.

### Example 2

To the polypropylene polymer Moplen HP500N (delivered by Basell) was added 5 wt.- % (wt.-% without modifier) layered aluminosilicate using a masterbatch, KNC 920, consisting of polypropylene-graft-maleic anhydride, TPPP 2112 FA, (delivered by Kometra GmbH (PP-g-MA)) and modified layered aluminosilicate (LS), Nanofil 5, (delivered by Süd-Chemie AG) and 10 wt.-% Sidistar^{®} microsilica (delivered by Elkem AS (Sidistar T120 XP)). The polymer containing layered aluminosilicate and Sidistar^{®} microsilica was tested as follows.

The reaction-to-fire of the materials was tested according to ISO 5660-1 (cone calorimeter test). The sample thickness was 4 mm. The samples were measured in horizontal position in an Al-tray. The investigation was done for three different irradiations (35, 50, and 70 kW m⁻²) representing different fire scenarios. All measurements were done in duplicate and show a very high reproducibility. The heat release characteristic as the main fire hazard was addressed in particular by the means of discussing the total heat evolved (THE), maximum heat release rate (PHRR), and maximum averaged rate of heat emission (MAHRE).

For comparison purpose polypropylene without fire retardants, polypropylene with 5 wt.-% layered aluminosilicate and polypropylene with 10 wt.-% Sidistar^{®} microsilica was tested.

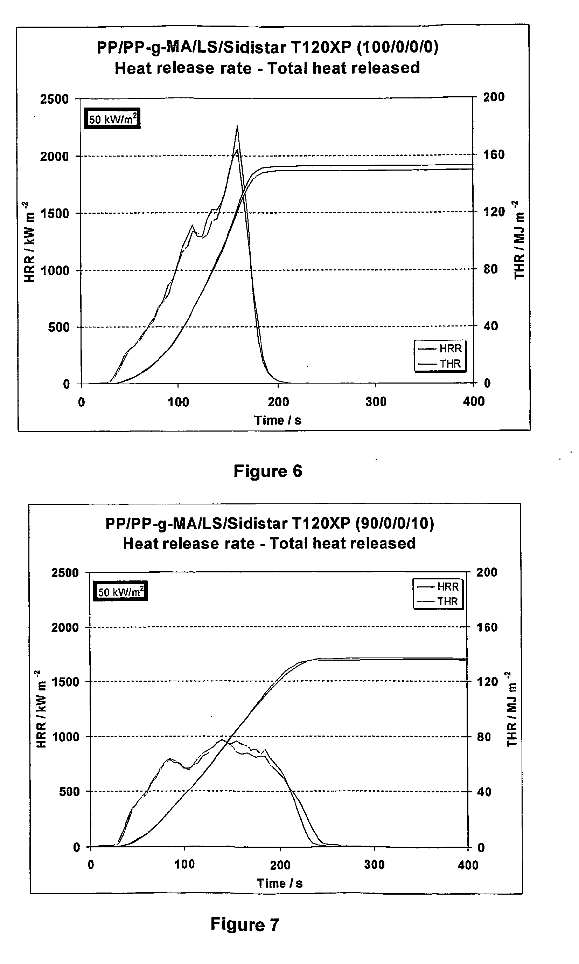

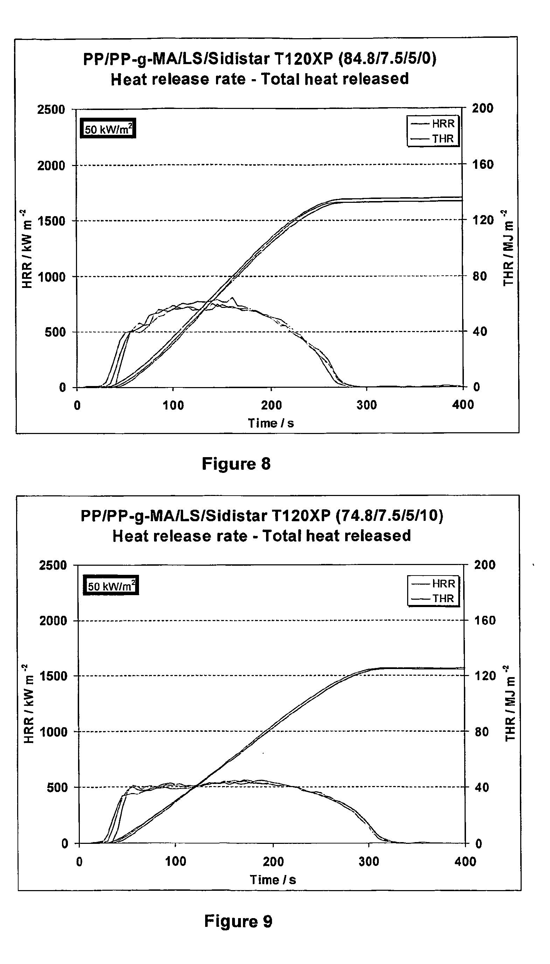

The results are shown in Figure 6 - 9. Figures 6 shows the heat release rate (HRR) and total heat released (THR) versus time and Figure 7 shows the corresponding graphs for polypropylene containing 10 wt.-% microsilica, Figure 8 shows the corresponding graphs for polypropylene containing 5 wt.-% layered aluminosilicate and Figure 9 shows corresponding graphs for the polymeric material according to the present invention containing both layered aluminosilicate and microsilica.

Figure 6-9 show that the heat release rate for polypropylene containing both layered aluminosilicate and microsilica is drastically reduced not only compared to polypropylene without fire retardants, but also compared to polypropylene containing layered aluminosilicate and compared to polypropylene containing microsilica. Also the total heat released is substantially decreased for polypropylene containing both layered aluminosilicate and microsilica.

Examples 1 and 2 relating to polyamide which is a polar material and to polypropylene which is a non-polar material show that the substantial increase in fire retardancy obtained by addition of both layered aluminosilicate and microsilica as flame retardants works independently from the nature of the polymer.

## Claims

1. Flame retardant polymeric materials, which polymeric materials contain 2 - 20 wt.-% microsilica and 1 - 10 wt.-% layered nanodispersed aluminosilicates as flame retardant additives, said wt.-% based on 100 wt.-% of the polymer.

2. Polymeric materials according to Claim 1, wherein the polymeric material contains nanodispersed organically modified layered aluminosilicates.

3. Polymeric materials according to Claim 2, wherein the polymeric materials contain montmorillonite type aluminosilicate intercalated with quaternary amonium ions.

4. Polymeric materials according to Claim 2, wherein the polymeric materials contain montmorillonite type aluminosilicate intercalated with organical phosphonium ions.

5. Polymeric materials according to any preceding claim, wherein the polymeric materials contain 2 - 7.5 wt.-% layered silicates and 5 - 15 wt.-% microsilica.

## Patentansprüche

1. Flammhemmende polymere Materialien, welche polymeren Materialien 2 - 20 Gew.-% Mikrosiliciumdioxid und 1 - 10 Gew.-% schichtförmige nanodispergierte Aluminosilicate als flammhemmende Zusatzmittel enthalten, wobei die Gew.-% auf 100 Gew.-% des Polymers bezogen sind.

2. Polymere Materialien nach Anspruch 1, wobei das polymere Material nanodispergierte, organisch modifizierte, schichtförmige Aluminosilicate enthält.

3. Polymere Materialien nach Anspruch 2, wobei die polymeren Materialien Aluminosilicat vom Montmorillonittyp enthalten, das mit quartären Ammoniumionen interkaliert ist.

4. Polymere Materialien nach Anspruch 2, wobei die polymeren Materialien Aluminosilicat vom Montmorillonittyp enthalten, das mit organischen Phosphoniumionen interkaliert ist.

5. Polymere Materialien nach irgendeinem vorhergehenden Anspruch, wobei die polymeren Materialien 2 - 7,5 Gew.-% schichtförmige Silicate und 5 - 15 Gew.-% Mikrosiliciumdioxid enthalten.

## Revendications

1. Matières polymères à retard de flamme, lesquelles matières polymères contiennent 2-20 % en poids de microsilice et 1-10 % en poids d'aluminosilicates nanodispersés feuilletés en tant qu'additifs retardateurs de flamme, lesdits % en poids etant basés sur 100 % en poids du polymère.

2. Matières polymères selon la revendication 1, dans lesquelles la matière polymère contient des aluminosilicates feuilletés organiquement modifiés nanodispersés.

3. Matières polymères selon la revendication 2, dans lesquelles les matières polymères contiennent un aluminosilicate de type montmorillonite dans lequel sont intercalés des ions ammonium quaternaire.

4. Matières polymères selon la revendication 2, dans lesquelles les matières polymères contiennent un aluminosilicate de type montmorillonite dans lequel sont intercalés des ions phosphonium organiques.

5. Matières polymères selon l'une quelconque des revendications précédentes, dans lesquelles les matières polymères contiennent 2-7,5 % en poids de silicates feuilletés et 5-15 % en poids de microsilice.
